# FASCICULE DE BREVET EUROPEEN

(11) **EP 3 170 242 B1**
(45) Date de publication et mention de la délivrance du brevet: **13.06.2018**
(21) Numéro de dépôt: 15759843.4
(22) Date de dépôt: 08.07.2015
(51) Int. Cl.: H02J 7/00, B60L 1/00, F02N 11/08, F02B 39/10, B60R 16/03

(54) **CIRCUIT ÉLECTRIQUE ET PROCÉDÉ DE GESTION ASSOCIÉ**
ELEKTRISCHE SCHALTUNG UND ZUGEHÖRIGES VERWALTUNGSVERFAHREN
ELECTRICAL CIRCUIT AND ASSOCIATED METHOD OF MANAGEMENT

(30) Priorité: 16.07.2014 FR 1456810
(43) Date de publication de la demande: 24.05.2017
(73) Titulaire: Valeo Systèmes De Contrôle Moteur, 95800 Cergy St Christophe (FR)
(72) Inventeur: DECOSTER, Sylvain, 95892 Cergy-Pontoise (FR)
(74) Mandataire: Garcia, Christine
(86) Numéro de dépôt international: PCT/FR2015/051887
(87) Numéro de publication internationale: WO 2016/009130

(56) Documents cités:
- US-A1- 2005 099 155
- US-A1- 2009 295 399

## Description

La présente invention concerne le domaine des circuits électriques d'alimentation, notamment pour véhicules automobiles.

En particulier, la présente invention concerne les circuits électriques d'alimentation comprenant une source d'alimentation destinée à alimenter d'une part des composants de faible puissance et d'autre part un composant de forte puissance de manière transitoire. Le problème avec ce type de circuit électrique réside dans le fait que lors des phases transitoires, l'alimentation du composant de forte puissance provoque une chute de tension au niveau de la source d'alimentation, généralement une batterie. Du fait de cette chute de tension, les autres composants, c'est-à-dire les composants de faible puissance peuvent ne plus être alimentés avec une tension suffisante pour leur bon fonctionnement de sorte que l'activation du composant de forte puissance peut provoquer un dysfonctionnement, voire l'extinction, des composants de faible puissance.

Or, dans le cas d'un circuit électrique de véhicule automobile, les composants de faible puissance alimentés par la batterie peuvent être des éléments liés à la sécurité, comme les phares, ou de confort, comme l'autoradio, de sorte que leur fonctionnement peut provoquer des effets très néfastes vis-à-vis de l'utilisateur.

La demande de brevet US2009/0295399A1 divulgue un circuit électrique dans lequel on évalue la chute de tension engendrée par l'utilisation d'un démarreur de manière à empêcher l'arrêt du moteur thermique du véhicule si l'évaluation de la tension résiduelle lors de la chute de tension n'assure pas une tension minimale de fonctionnement au démarreur. Ce circuit électrique ne permet pas de préserver le fonctionnement d'un composant de faible puissance.

Il apparaît donc nécessaire de trouver une solution pour surmonter les inconvénients de l'état de la technique dans le cas d'un circuit comprenant une unique source d'alimentation.

Le but de la présente invention est donc de fournir un procédé et un équipement permettant d'assurer l'alimentation des composants de faible puissance lors de l'activation d'un composant de forte puissance.

La présente invention a donc pour objet un procédé de gestion d'un circuit électrique de véhicule automobile comprenant :
- au moins un composant de faible puissance nécessitant une tension minimale de fonctionnement,
- un composant de forte puissance,
- une source d'alimentation du, au moins un, composant de faible puissance et du composant de forte puissance,
le procédé comprenant les étapes suivantes :
- on calcule la chute de tension engendrée aux bornes de la source d'alimentation par l'alimentation du composant de forte puissance en fonction de la résistance interne de la source d'alimentation,
- on limite la puissance du composant de forte puissance de sorte que la tension résiduelle lors de la chute de tension due à l'alimentation du composant de forte puissance soit supérieure ou égale à la tension minimale de fonctionnement du, au moins un, composant de faible puissance.

Selon un autre aspect de la présente invention, le composant de forte puissance est un compresseur électrique de suralimentation utilisé en phase transitoire du moteur du véhicule automobile pour apporter un surplus de puissance au moteur. Alternativement, le composant de forte puissance est un dispositif stop&start.

Selon un aspect supplémentaire de la présente invention, le procédé comprend une étape préliminaire supplémentaire dans laquelle on détermine la résistance interne de la source d'alimentation, notamment par au moins un capteur configuré pour mesurer la tension et/ou l'intensité délivrées par la source d'alimentation.

Selon un aspect additionnel de la présente invention, la détermination de la résistance interne de la source d'alimentation est réalisée à chaque démarrage du véhicule automobile.

Selon un autre aspect de la présente invention, la source d'alimentation est une batterie.

Selon un aspect supplémentaire de la présente invention, le, au moins un, composant de faible puissance est compris dans la liste suivante :
- des phares de véhicule automobile,
- un autoradio,
- un calculateur de bord,
- un calculateur d'airbag,
- un système de freinage,
- un système multimédia,
- un dispositif de navigation,
- un dispositif de direction assistée.

Selon un autre aspect de la présente invention, le procédé comprend une protection d'au moins un deuxième composant de faible puissance protégé par un convertisseur DC/DC disposé entre la source d'alimentation et ledit, au moins un, deuxième composant de faible puissance.

Selon un aspect de la présente invention, la limitation de la puissance du composant de forte puissance comprend la mise à zéro de la puissance du composant de forte puissance. Autrement dit, le composant de forte puissance est inhibé et ne fonctionne donc pas.

Selon un autre aspect de la présente invention, dans la limitation de la puissance du composant de forte puissance, la puissance du composant de forte puissance est rendue égale à une valeur P non nulle, notamment inférieure à une valeur nominale de fonctionnement du composant de forte puissance.

La présente invention concerne également un circuit électrique comprenant :
- au moins un premier composant de faible puissance nécessitant une tension minimale de fonctionnement,
- un composant de forte puissance,
- une source d'alimentation du, au moins un, composant de faible puissance et du composant de forte puissance,
- des moyens de traitement configurés pour :
   - calculer la chute de tension engendrée par l'alimentation du composant de forte puissance en fonction de la résistance interne dudit composant de forte puissance,
   - limiter la puissance du composant de forte puissance de sorte que la tension résiduelle lors de la chute de tension due à l'alimentation du composant de forte puissance soit supérieure ou égale à la tension minimale de fonctionnement du, au moins un, composant de faible puissance.

Selon un autre aspect de la présente invention, le circuit électrique comprend également au moins un capteur de mesure de l'intensité et/ou de la tension délivrée par la source d'alimentation.

Selon un aspect supplémentaire de la présente invention, le circuit électrique comprend également un convertisseur DC/DC disposé entre la source d'alimentation et au moins un deuxième composant de faible puissance, les moyens de traitement étant configurés pour limiter la puissance du composant de forte puissance de sorte que la tension résiduelle lors de la chute de tension due à l'alimentation du composant de forte puissance soit supérieure ou égale à la tension minimale de fonctionnement du, au moins un, premier composant de faible puissance.

Selon un aspect additionnel de la présente invention, le circuit électrique est installé dans un véhicule automobile et le, au moins un, deuxième composant correspond à un composants lié à la sécurité du véhicule.

Le circuit électrique selon l'invention peut comprendre l'une quelconque des caractéristiques décrites pour le procédé qui lui sont compatibles.

D'autres caractéristiques et avantages de l'invention apparaîtront dans la description qui va maintenant en être faite, en référence aux dessins annexés qui en représentent, à titre indicatif mais non limitatif, des modes de réalisation possibles.

Sur ces dessins:
- la figure 1 représente un schéma d'un circuit électrique d'alimentation selon un premier mode de réalisation de la présente invention;
- La figure 2 représente un organigramme des différentes étapes du procédé de gestion du circuit électrique d'alimentation selon la présente invention ;
- La figure 3 représente un schéma d'un circuit électrique d'alimentation selon un deuxième mode de réalisation de la présente invention;

Sur ces figures, les mêmes numéros de référence désignent des éléments identiques.

Dans la description qui va suivre, on désigne de façon générale:
Le terme «composant de faible puissance» correspond à un composant dont la puissance n'excède pas 1kW ;
Le terme « composant de forte puissance » correspond à un composant dont la puissance est supérieure à 1kW ;
Le terme « compresseur électrique de suralimentation » correspond à un compresseur électrique agissant en complément ou à la place du turbocompresseur d'un moteur d'un véhicule automobile pour fournir un surplus de puissance, par exemple pour gommer le temps de réponse d'un turbocompresseur, lors des phases de transitoires comme par exemple lors des accélérations à bas régime ;
Le terme « DC » correspond à l'acronyme anglais Direct Current et correspond au courant continu.
Le terme « ASIC » correspond à l'acronyme anglais Application Specific Integrated Circuit et correspond à des circuits imprimés pour une application spécifique ;
Le terme « FPGA » correspond à l'acronyme anglais Field Programmable Gate Array et correspond à un réseau de portes programmables in situ.
Le terme « RAM » correspond à l'acronyme anglais Random Access Memory et correspond à la mémoire vive.
Le terme « ROM » correspond à l'acronyme anglais Read Only memory et correspond à la mémoire morte.

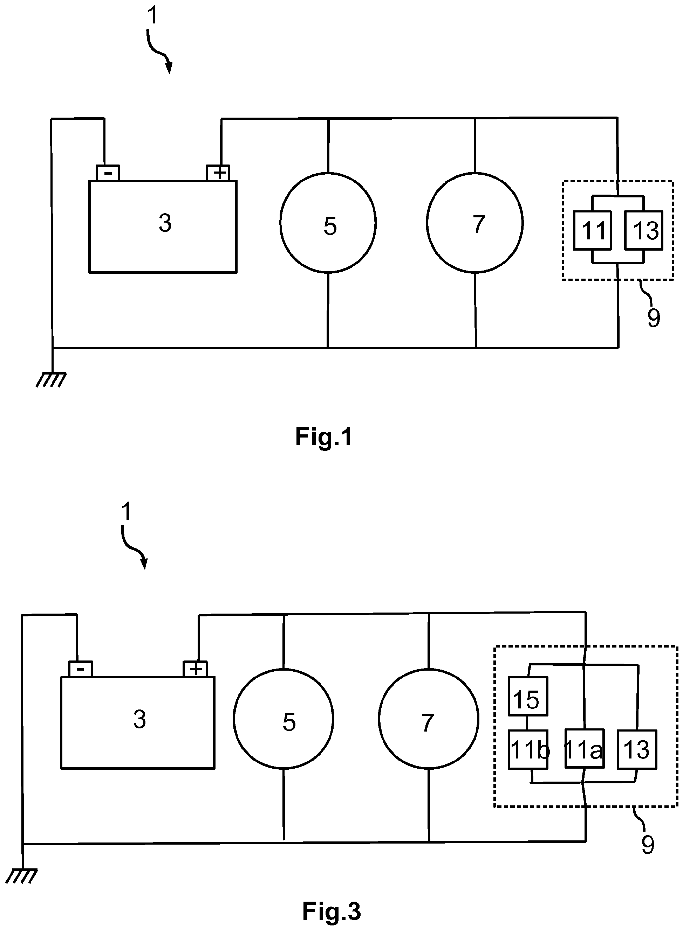

La figure 1 représente un exemple d'architecture d'un circuit électrique 1 d'alimentation d'un véhicule automobile comprenant une source d'alimentation comme par exemple une batterie 3 de 12 ou 14V, un générateur ou alternateur 5, un démarreur 7 et des charges 9. Les différents éléments du circuit étant branchés en parallèle sur la batterie 3 entre une borne positive notée + et une borne négative notée - reliée à la masse du véhicule. Les charges 9 comprennent au moins un composant de faible puissance 11 comme par exemple les phares, l'autoradio, un ordinateur de bord ou les essuie-glaces et un composant de forte puissance 13 dont la puissance est modulable comme par exemple un compresseur électrique de suralimentation ou un dispositif stop&start.

Comme décrit précédemment, l'activation du composant de forte puissance 13 crée un appel de courant et provoque une chute de tension au niveau de la batterie 3. L'idée de la présente invention est donc de limiter l'appel de courant créé par le composant de forte puissance 13 en modulant sa puissance de manière à ce que la chute de tension vue par les composants de faible puissance 11 ne perturbe pas leur fonctionnement.

Or, la chute de tension vue par les composants de faible puissance 11 ne dépend pas seulement de l'appel de courant créé par l'activation du composant de forte puissance 13 mais aussi de la résistance interne de la batterie 3 qui est un paramètre qui varie avec le temps. Il convient donc d'utiliser ce paramètre pour déterminer la puissance maximale autorisée du composant de forte puissance 13 pour garantir le bon fonctionnement des composants de faible puissance.

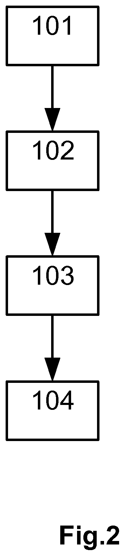

Les différentes étapes du procédé de gestion d'un circuit électrique tel que présenté sur la figure 1 vont maintenant être décrites à partir de la figure 2.

La première étape 101 correspond à la détermination de la résistance interne de la batterie 3. Cette étape peut être facultative puisqu'il n'est pas nécessaire de déterminer la résistance interne à chaque fois que le compresseur électrique de suralimentation 13 est activé. Cette détermination de la résistance interne de la batterie 3 est par exemple effectuée à chaque démarrage ou à intervalles de temps réguliers, par exemple une fois par semaine ou une fois par mois ou en fonction d'un planning prédéfini, les mesures étant par exemple plus rapprochées dans le temps au cours du vieillissement de la batterie 3. La détermination de la résistance est réalisée à partir de la mesure de l'intensité et de la tension délivrées par la batterie 3, par exemple au démarrage du véhicule. Cette détermination est par exemple effectuée par un capteur combinant un ampèremètre branché en série sur la borne positive + ou borne négative (-) et un voltmètre branché en parallèle sur les bornes de la batterie 3. La résistance interne de la batterie 3 étant obtenue par la relation Ri=U/I, où Ri est la résistance interne de la batterie 3, U la tension mesurée entre les bornes de la batterie 3 et I l'intensité mesurée en sortie de la batterie 3.

La deuxième étape 102 correspond à la détermination de la tension minimale pour le bon fonctionnement des composants de faible puissance 11. Cette étape est également facultative car la valeur de tension minimale est généralement fournie par le constructeur ou peut être déterminée préalablement par des essais. Cette tension minimale est généralement comprise entre 6 et 8V, mais peut également être plus faible, par exemple entre 0,5 et 2V. Ainsi pour une tension minimale de 8V et pour une batterie 14V, la chute de tension lors de l'activation du composant de forte puissance 13 ne doit pas excédée 14-8=6V.

La troisième étape 103 correspond au calcul de la chute de tension engendrée par l'alimentation du composant de forte puissance 13 en fonction de la résistance interne Ri de la batterie 3 pour obtenir une tension suffisante pour le bon fonctionnement des composants de faible puissance 11. Connaissant, la résistance interne Ri de la batterie 13, connue ou déterminée lors de la première étape 101 ainsi que la chute de tension maximale acceptable pour les composants de faible puissance 11, connue ou déterminée lors de la deuxième étape 102, l'appel de courant maximal acceptable lors de l'activation du composant de forte puissance 13 peut être déterminé par la relation Iₘₐₓ=ΔU/Ri avec Iₘₐₓ l'appel de courant maximal, ΔU la chute de tension maximale acceptable et Ri la résistance interne de la batterie 13.

La quatrième étape 104 concerne la limitation de la puissance du composant de forte puissance 13 pour limiter la valeur de l'appel de courant à Iₘₐₓ de sorte que la tension résiduelle lors de la chute de tension due à l'alimentation du composant de forte puissance 13 soit supérieure ou égale à la tension minimale de fonctionnement des composants de faible puissance 11. En effet, la puissance et l'appel de courant sont directement liés par la formule P=RIₘₐₓ² ou P=U*Iₘₐₓ avec R la résistance interne du composant de forte puissance 13, P la puissance du composant de forte puissance et Iₘₐₓ l'appel de courant maximal et U la tension. Ainsi, une boucle de contrôle de commande de la puissance peut être introduite pour limiter à chaque instant la puissance délivrée par le composant de forte puissance 13 pour ne pas dépasser l'appel de courant maximal déterminé.

Selon une variante, la limitation de la puissance du composant de forte puissance 13 comprend la mise à zéro de sa puissance. Autrement dit, le composant de forte puissance 13 est inhibé et ne fonctionne donc pas. Ceci est particulièrement avantageux si la batterie 3 est trop usée pour supporter une activation du composant de forte puissance 13 sans dégrader la tension délivrée aux composants de faible puissance 11.

Selon une autre variante, la puissance du composant de forte puissance 13 est rendue égale à une valeur P non nulle. Cette valeur P non nulle est notamment inférieure à une valeur nominale de fonctionnement du composant de forte puissance 13. Ainsi, la puissance consommée par le composant de forte puissance 13 reste suffisamment petite pour permettre que la tension minimale de fonctionnement des composants de faible puissance 11 soit respectée.

Les différentes étapes décrites précédemment sont mises en oeuvre par des moyens de traitement qui peuvent être centralisés ou répartis à différents emplacements du circuit électrique de commande. Ces moyens de traitement sont par exemple des composants logiques de type ASIC ou FPGA, un microcontrôleur ou un microprocesseur ou une combinaison de ces éléments. De plus, ces moyens de traitement peuvent être couplés avec des moyens de stockage d'instructions ou de valeurs comme par exemple des mémoires vives (RAM) ou mortes (ROM).

Selon un mode de réalisation alternatif représenté sur la figure 3, le circuit électrique 1 d'alimentation d'un véhicule automobile diffère du circuit de la figure 1 en ce que les composants de faible puissance sont réparties en un premier 11a et un deuxième groupe 11b et que le circuit électrique 1 comprend également un convertisseur de tension continue DC/DC 15 placé entre la batterie 3 et au moins un deuxième composant de faible puissance et correspondant au deuxième groupe 11b. En effet, il peut être nécessaire de protéger plus efficacement certains composants de faible puissance 11b, par exemple le ou les composants liés à la sécurité de sorte que leur alimentation est assurée par un convertisseur de tension 15 qui permet en cas de chute de tension produite par l'alimentation du composant de forte puissance 13 d'assurer une tension d'alimentation minimale des deuxièmes composants 11b. Une telle configuration permet d'apporter une garantie supplémentaire concernant le fonctionnement des deuxièmes composants 11b en cas de chute de tension. Par ailleurs, le nombre de deuxièmes composants de faible puissance sera limité de manière à limiter la consommation nécessaire au convertisseur de tension continue DC/DC 15. Les différentes étapes du procédé peuvent alors être établies en fonction de la tension minimale nécessaire pour les premiers composants de faible puissance 11a.

La présente invention permet donc, du fait de la détermination de la résistance interne de la batterie 3 et de la limitation de la puissance du composant de forte puissance 13 lors des phases transitoires en fonction de la résistance interne de la batterie 3, de maintenir une tension minimale pour les composants de faible puissance 11 lors de l'activation du composant de forte puissance 13 et ainsi d'assurer le bon fonctionnement des composants de faible puissance 11 sécuritaires ou de confort. Dans le cas d'un compresseur électrique de suralimentation, le gain de puissance apporté par l'activation du compresseur électrique de suralimentation est légèrement moindre mais permet de maintenir en fonctionnement l'ensemble des autres fonctions du véhicule comme l'éclairage des phares ou le fonctionnement de l'autoradio. Ce léger déficit de puissance est imperceptible pour l'utilisateur contrairement au dysfonctionnement de l'une des fonctions liées aux composants de faible puissance. Le confort global du véhicule est donc amélioré.

## Revendications

1. Procédé de gestion d'un circuit électrique (1) de véhicule automobile comprenant :
- au moins un composant de faible puissance (11) nécessitant une tension minimale de fonctionnement,
- au moins un composant de forte puissance (13),
- une source d'alimentation (3) du, au moins un, composant de faible puissance et du composant de forte puissance,
le procédé comprenant les étapes suivantes :
- on calcule une chute de tension engendrée aux bornes de la source d'alimentation par l'alimentation du composant de forte puissance (13) en fonction de la résistance interne de la source d'alimentation (3),
- on limite la puissance du composant de forte puissance (13) de sorte que la tension résiduelle lors de la chute de tension due à l'alimentation du composant de forte puissance (13) soit supérieure ou égale à la tension minimale de fonctionnement du, au moins un, composant de faible puissance (11).

2. Procédé de gestion selon la revendication 1 dans lequel le composant de forte puissance (13) est un compresseur électrique de suralimentation utilisé en phase transitoire du moteur du véhicule automobile pour apporter un surplus de puissance au moteur.

3. Procédé de gestion selon la revendication 1 ou 2 comprenant une étape préliminaire supplémentaire dans laquelle on détermine la résistance interne de la source d'alimentation (3).

4. Procédé de gestion selon la revendication 3 dans lequel la détermination de la résistance interne de la source d'alimentation (3) est réalisée à chaque démarrage du véhicule automobile.

5. Procédé de gestion selon l'une des revendications précédentes dans lequel la source d'alimentation (3) est une batterie.

6. Procédé selon l'une des revendications précédentes dans lequel le, au moins un, composant de faible puissance (11) est compris dans la liste suivante :
- un calculateur d'airbag,
- un système de freinage,
- un système multimédia,
- un dispositif de navigation,
- un dispositif de direction assistée,
- un calculateur de bord,
- un autoradio,
- des phares de véhicule automobile.

7. Procédé selon l'une des revendications précédentes comprenant une protection d'au moins un deuxième composant de faible puissance protégé par un convertisseur DC/DC disposé entre la source d'alimentation et ledit, au moins un, deuxième composant de faible puissance.

8. Procédé selon l'une des revendications précédentes, dans lequel la limitation de la puissance du composant de forte puissance (13) comprend la mise à zéro de la puissance du composant de forte puissance (13).

9. Procédé selon l'une des revendications 1 à 7, dans lequel, dans la limitation de la puissance du composant de forte puissance (13), la puissance du composant de forte puissance (13) est rendue égale à une valeur non nulle.

10. Circuit électrique (1) comprenant
- un composant de forte puissance (13),
- une source d'alimentation (3) du, au moins un, composant de faible puissance et du composant de forte puissance,
- des moyens de traitement configurés pour calculer la chute de tension aux bornes de la source d'alimentation engendrée par l'alimentation du composant de forte puissance (13) en fonction de la résistance interne dudit composant de forte puissance (13),
**caractérisé en ce qu'**il comprend au moins un premier composant de faible puissance (11) alimenté par la source d'alimentation (3) et nécessitant une tension minimale de fonctionnement et **en ce que** les moyens de traitement sont également configurés pour limiter la puissance du composant de forte puissance (13) de sorte que la tension résiduelle lors de la chute de tension due à l'alimentation du composant de forte puissance (13) soit supérieure ou égale à la tension minimale de fonctionnement du, au moins un, composant de faible puissance (11).

11. Circuit électrique (1) selon la revendication 10 comprenant également au moins un capteur de mesure de l'intensité et/ou de la tension délivrée par la source d'alimentation (3).

12. Circuit électrique (1) selon la revendication 10 ou 11 comprenant également un convertisseur DC/DC (15) disposé entre la source d'alimentation (3) et au moins un deuxième composant de faible puissance (11a), les moyens de traitement étant configurés pour limiter la puissance du composant de forte puissance (13) de sorte que la tension résiduelle lors de la chute de tension due à l'alimentation du composant de forte puissance (13) soit supérieure ou égale à la tension minimale de fonctionnement du, au moins un, premier composant de faible puissance (11b).

13. Circuit électrique (1) selon la revendication 12 installé dans un véhicule automobile et dans lequel le, au moins un, deuxième composant correspond à un composant lié à la sécurité du véhicule.

## Patentansprüche

1. Verfahren zur Verwaltung einer elektrischen Schaltung (1) eines Kraftfahrzeugs, umfassend:
- mindestens eine leistungsschwache Komponente (11), die eine Mindestbetriebsspannung erfordert,
- mindestens eine leistungsstarke Komponente (13),
- eine Versorgungsquelle (3) zur Versorgung der mindestens einen leistungsschwachen Komponente und der leistungsstarken Komponente, wobei das Verfahren die folgenden Schritte umfasst:
- man berechnet einen Spannungsabfall, der an den Klemmen der Versorgungsquelle durch die Versorgung der leistungsstarken Komponente (13) in Abhängigkeit vom Innenwiderstand der Versorgungsquelle (3) bewirkt wird,
- man begrenzt die Leistung der leistungsstarken Komponente (13) so, dass die Restspannung bei dem durch die Versorgung der leistungsstarken Komponente (13) bedingten Spannungsabfall größer oder gleich der Mindestbetriebsspannung der mindestens einen leistungsschwachen Komponente (11) ist.

2. Verwaltungsverfahren nach Anspruch 1, wobei die leistungsstarke Komponente (13) ein elektrischer Kompressor ist, der in einer Übergangsphase des Motors des Kraftfahrzeugs verwendet wird, um dem Motor eine Leistungssteigerung zu verschaffen.

3. Verwaltungsverfahren nach Anspruch 1 oder 2, umfassend einen zusätzlichen Vorabschritt, bei dem man den Innenwiderstand der Versorgungsquelle (3) bestimmt.

4. Verwaltungsverfahren nach Anspruch 3, wobei die Bestimmung des Innenwiderstands der Versorgungsquelle (3) bei jedem Startvorgang des Kraftfahrzeugs ausgeführt wird.

5. Verwaltungsverfahren nach einem der vorhergehenden Ansprüche, wobei die Versorgungsquelle (3) eine Batterie ist.

6. Verfahren nach einem der vorhergehenden Ansprüche, wobei die mindestens eine leistungsschwache Komponente (11) in der folgenden Liste enthalten ist:
- ein Airbag-Steuergerät,
- ein Bremssystem,
- ein Multimediasystem,
- eine Navigationseinrichtung,
- eine Servolenkungseinrichtung,
- ein Bordcomputer,
- ein Autoradio,
- Kraftfahrzeugscheinwerfer.

7. Verfahren nach einem der vorhergehenden Ansprüche, umfassend einen Schutz mindestens einer zweiten leistungsschwachen Komponente, die durch einen DC/DC-Wandler geschützt wird, der zwischen der Versorgungsquelle und der mindestens einen zweiten leistungsschwachen Komponente angeordnet ist.

8. Verfahren nach einem der vorhergehenden Ansprüche, wobei die Begrenzung der Leistung der leistungsstarken Komponente (13) das Setzen der Leistung der leistungsstarken Komponente (13) auf null umfasst.

9. Verfahren nach einem der Ansprüche 1 bis 7, wobei bei der Begrenzung der Leistung der leistungsstarken Komponente (13) die Leistung der leistungsstarken Komponente (13) auf einen Wert ungleich null gebracht wird.

10. Elektrische Schaltung (1), umfassend:
- eine leistungsstarke Komponente (13),
- eine Versorgungsquelle (3) zur Versorgung der mindestens einen leistungsschwachen Komponente und der leistungsstarken Komponente,
- Verarbeitungsmittel, die dazu konfiguriert sind, den Spannungsabfall zu berechnen, der an den Klemmen der Versorgungsquelle durch die Versorgung der leistungsstarken Komponente (13) in Abhängigkeit vom Innenwiderstand der leistungsstarken Komponente (13) bewirkt wird,
**dadurch gekennzeichnet, dass** sie mindestens eine erste leistungsschwache Komponente (11) umfasst, die von der Versorgungsquelle (3) versorgt wird und eine Mindestbetriebsspannung erfordert, und dass die Verarbeitungsmittel ferner dazu konfiguriert sind, die Leistung der leistungsstarken Komponente (13) so zu begrenzen, dass die Restspannung bei dem durch die Versorgung der leistungsstarken Komponente (13) bedingten Spannungsabfall größer oder gleich der Mindestbetriebsspannung der mindestens einen leistungsschwachen Komponente (11) ist.

11. Elektrische Schaltung (1) nach Anspruch 10, umfassend ferner mindestens einen Messfühler zum Messen der Stromstärke und/oder der Spannung, die von der Versorgungsquelle (3) abgegeben wird.

12. Elektrische Schaltung (1) nach Anspruch 10 oder 11, umfassend ferner einen DC/DC-Wandler (15), der zwischen der Versorgungsquelle (3) und der mindestens einen zweiten leistungsschwachen Komponente (11a) angeordnet ist, wobei die Verarbeitungsmittel dazu konfiguriert sind, die Leistung der leistungsstarken Komponente (13) so zu begrenzen, dass die Restspannung bei dem durch die Versorgung der leistungsstarken Komponente (13) bedingten Spannungsabfall größer oder gleich der Mindestbetriebsspannung der mindestens einen ersten leistungsschwachen Komponente (11b) ist.

13. Elektrische Schaltung (1) nach Anspruch 12, die in einem Kraftfahrzeug installiert ist und bei der die mindestens eine zweite Komponente einer mit der Sicherheit des Fahrzeugs zusammenhängenden Komponente entspricht.

## Claims

1. Method for managing an electrical circuit (1) of a motor vehicle, comprising:
- at least one low-power component (11) requiring a minimum operating voltage,
- at least one high-power component (13),
- a power source (3) for the at least one low-power component and for the high-power component,
the method comprising the following steps:
- a voltage drop created at the terminals of the power source by the supply of power to the high-power component (13) is calculated on the basis of the internal resistance of the power source (3),
- the power of the high-power component (13) is limited so that the residual voltage during the voltage drop due to the supply of power to the high-power component (13) is greater than or equal to the minimum operating voltage of the at least one low-power component (11).

2. Management method according to Claim 1, wherein the high-power component (13) is an electric supercharger used in a transient phase of the engine of the motor vehicle to provide excess power to the engine.

3. Management method according to Claim 1 or 2, comprising an additional preliminary step in which the internal resistance of the power source (3) is determined.

4. Management method according to Claim 3, wherein the determination of the internal resistance of the power source (3) is carried out on each start of the motor vehicle.

5. Management method according to any of the preceding claims, wherein the power source (3) is a battery.

6. Method according to any of the preceding claims, wherein the at least one low-power component (11) is included in the following list:
- an airbag computer,
- a braking system,
- a multimedia system,
- a navigation device,
- a power-assisted steering device,
- an on-board computer,
- a car radio,
- motor vehicle headlights.

7. Method according to any of the preceding claims, comprising protection of at least one second low-power component protected by a DC/DC converter connected between the power source and said at least one second low-power component.

8. Method according to any of the preceding claims, wherein the limiting of the power of the high-power component (13) comprises resetting the power of the high-power component (13) to zero.

9. Method according to any of Claims 1 to 7, wherein, in the limiting of the power of the high-power component (13), the power of the high-power component (13) is made equal to a non-zero value.

10. Electrical circuit (1) comprising
- a high-power component (13),
- a power source (3) for the at least one low-power component and for the high-power component,
- processing means configured to calculate the voltage drop at the terminals of the power source created by the supply of power to the high-power component (13) on the basis of the internal resistance of said high-power component (13),
**characterized in that** it comprises at least one first low-power component (11) supplied by the power source (3) and requiring a minimum operating voltage, and **in that** the processing means are also configured to limit the power of the high-power component (13) so that the residual voltage during the voltage drop due to the supply of power to the high-power component (13) is greater than or equal to the minimum operating voltage of the at least one low-power component (11).

11. Electrical circuit (1) according to Claim 10, further comprising at least one sensor for measuring the current and/or the voltage delivered by the power source (3).

12. Electrical circuit (1) according to Claim 10 or 11, further comprising a DC/DC converter (15) connected between the power source (3) and at least one second low-power component (11a), the processing means being configured to limit the power of the high-power component (13) so that the residual voltage during the voltage drop due to the supply of power to the high-power component (13) is greater than or equal to the minimum operating voltage of the at least one first low-power component (11b).

13. Electrical circuit (1) according to Claim 12, installed in a motor vehicle, wherein the at least one second component is a component concerned with the safety of the vehicle.
